# EUROPEAN PATENT SPECIFICATION

(11) **EP 3 367 731 B1**
(45) Date of publication and mention of the grant of the patent: **01.07.2020**
(21) Application number: 16795690.3
(22) Date of filing: 23.02.2016
(51) Int. Cl.: H04W 48/00, H04W 88/06

(54) **METHOD AND DEVICE FOR ADAPTIVE SELECTION OF DATA NETWORK**
VERFAHREN UND VORRICHTUNG FÜR ADAPTIVE AUSWAHL VON DATENNETZWERKEN
PROCÉDÉ ET DISPOSITIF POUR SÉLECTION ADAPTATIVE DE RÉSEAU DE DONNÉES

(30) Priority: 20.10.2015 CN 201510686180
(43) Date of publication of application: 29.08.2018
(73) Proprietor: ZTE Corporation, Shenzhen, Guangdong 518057 (CN)
(72) Inventor: LI, Xipeng, Shenzhen Guangdong 518057 (CN); LI, Yanfang, Shenzhen Guangdong 518057 (CN); SUN, Gengmao, Shenzhen Guangdong 518057 (CN)
(74) Representative: Aipex B.V.
(86) International application number: PCT/CN2016/074353
(87) International publication number: WO 2016/184203

(56) References cited:
- WO-A1-2013/188530
- CN-A- 101 754 324
- CN-A- 101 909 326
- CN-A- 103 118 398
- CN-A- 104 703 254
- US-A1- 2013 102 356
- US-A1- 2015 098 413
- GEMALTO N V ET AL: "Discussion paper on APN storage in UICC", 3GPP DRAFT; S1-134014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Zagreb, Croatia; 20130819 - 20130823 15 October 2013 (2013-10-15), XP050743278, Retrieved from the Internet: URL:http://www.3gpp.org/ftp/Meetings_3GPP_ SYNC/SA/SA1/Docsstatus/docs/ [retrieved on 2013-10-15]

## Description

### Technical Field

The present application relates to, but not limited to, the technical field of communications, and more particularly to a method and device for adaptive selection of data network.

### Background

Dual SIM (Subscriber Identity Module) Dual Standby (DSDS) is a new term in the existing mobile phone industry. DSDS means that two mobile phone cards can be inserted into a mobile phone and can be standby simultaneously. Simply put, a consumer using a Global System for Mobile Communication (GSM) DSDS mobile phone meaning that two GSM network mobile phone numbers can be used simultaneously in one mobile phone, and a consumer Code Division Multiple Access (CDMA) DSDS mobile phone means that two CDMA network mobile phone numbers can be used at the same time.

In the related art, DSDS is mainly used for third generation (3G) mobile communication technology mobile phones. With the maturity of mobile phone solutions of fourth generation (4G) mobile communication technology, based on 4G networks, there will be more applications and functions for the DSDS technology, one aspect is because a 4G network bandwidth can reach 150M, which has laid a solid foundation for the adoption of the 4G technology. It is foreseeable that we will stand on the shoulders of the 4G giant to provide users with more and better and unexpected new online experience.

As a 4G mobile network is still in a large-scale network construction stage in the world at currently, for the innovative technology of dual 4G, it has not yet appeared and popularized. However, we can foresee that in the near future, 4G networks will greatly change the current status of human mobile data applications.

Dual-card mobile phones have not been around for a long time. They were basically not supported on a mobile phone platform about 3 or 4 years ago. An Access Point Name (APN) refers to a network access technology, which is a parameter that must be configured when a mobile phone accesses the Internet. The APN determines which access mode is used by the mobile phone when accessing the network. At present, the mainstream dual-card mobile phones on the market can only support one card to access the Internet. The other card can only use a second generation (2G) mobile phone communication technology network, that is, it can only make calls. So for the current mainstream dual-card mobile phone, APN searching is only performed on one card. In addition, for some low-end platforms such as MTK, there is no APN automatic selection mechanism, which means that users need to select and configure APNs by themselves to access the Internet at most of the time.

Various features of the independent claims are known from US 2015/098413 A1, which teaches selecting an APN from an APN list stored in a UE. The UE can update the list. The UE selects the highest priority APN and attempts to establish a connection. If this fails, a different APN from the list is selected. If this succeeds, this APN is stored as the preferred APN. This continues until an APN on the APN list is selected. Related technologies are known from US 2013/102356 A1 and GEMALTO N V ET AL: "Discussion paper on APN storage in UICC", 3GPP DRAFT; S1-134014, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG1, no. Zagreb, Croatia; 20130819 - 20130823 15 October 2013.

### Summary

The following is a brief introduction for a subject described herein in detail. The brief introduction is not intended to restrict the scope of protection of claims.

Embodiments of the present invention provide a method and device for adaptive selection of data network according to appended independent claims, capable of solving the problem in the related art where a multi-card terminal user needs to select and configure an APN to access the Internet. Further improvements and embodiments are provided in the dependent claims.

Also provided is a method for adaptive selection of data network, including the steps as follows.

After being powered on, a terminal searches a database for an APN list in the terminal for an APN which enables the terminal to successfully establish a data network service using identification information of each SIM.

The terminal initiates a network usage request to a network server by using searched-out APNs as parameters respectively.

After searching out at least two APN groups which enable the terminal to successfully establish data network services, the terminal selects a data network with the highest network transmission rate from all data networks to use a data service.

In an exemplary embodiment, the method further includes the step as follows.

When searching out one APN group which enables the terminal to successfully establish a data network service, the terminal selects a data network corresponding to the APN group to use a data service.

In an exemplary embodiment, the identification information of each SIM corresponds to at least one APN group; the database for the APN list in the terminal includes at least one APN group, and each APN group corresponds to network parameters of an operator.

In an exemplary embodiment, the step that a terminal searches a database for an APN list in the terminal for an APN which enables the terminal to successfully establish a data network service using identification information of each SIM includes:
the terminal searches the database for the APN list in the terminal for at least one corresponding APN group using the identification information of each SIM; and
the terminal initiates a data service establishment request to a network through each APN group as parameters in a polling manner according to the at least one searched-out APN group to search for the APN which enables the terminal to successfully establish the data network service.

In an exemplary embodiment, the step that the terminal selects a data network with the highest network transmission rate from all data networks to use a data service includes:
after searching out at least two APN groups which enable the terminal to successfully establish data network services, the terminal tests network transmission rates of data networks where the terminal successfully establishes the data network services; and
the terminal selects a data network with the highest network transmission rate to use a data service according to a network transmission rate test result of the data networks where the data network services are successfully established.

In an exemplary embodiment, the step that the terminal tests network transmission rates of data networks where the terminal successfully establishes the data network services includes:
statistics is made on network traffic of a current data network under a maximum support capability within a preset time period; and
a network transmission rate of a data network successfully registered by each SIM is calculated through the time period and the network traffic.

Also provided is a device for adaptive selection of data network, including:
a searching module configured to, after a terminal is powered on, search a database for an APN list in the terminal for an APN which enables the terminal to successfully establish a data network service using identification information of each SIM, and initiate a network usage request to a network server by using searched-out APNs as parameters respectively; and
a data network selection module configured to, after the searching module searches out at least two APN groups which enable the terminal to successfully establish data network services, select a data network with the highest network transmission rate from all data networks to use a data service.

In an exemplary embodiment, the data network selection module is further configured to, when the searching module searches out one APN group which enables the terminal to successfully establish a data network service, select a data network corresponding to the APN group to use a data service.

In an exemplary embodiment, the identification information of each SIM corresponds to at least one APN group, the database for the APN list in the terminal includes at least one APN group, and each APN group corresponds to network parameters of an operator.

In an exemplary embodiment, the searching module includes:
a searching unit configured to search the database for the APN list in the terminal for at least one corresponding APN group using the identification information of each SIM, and search, according to the at least one searched-out APN group, the at least one APN group for the APN which enables the terminal to successfully establish the data network service in a polling manner.

In addition, an embodiment of the present invention also provides a terminal supporting at least two SIMs, including a display and a processor. Herein the processor is configured to, after the display displays that a terminal is powered on, search a database for an APN list in the terminal for an APN which enables the terminal to successfully establish a data network service using identification information of each SIM; initiate a network usage request to a network server by using the searched-out APNs as parameters respectively; and after searching out at least two APN groups which enable the terminal to successfully establish data network services, select a data network with the highest network transmission rate from all data networks to use a data service.

In addition, an embodiment of the present invention also provides a computer-readable storage medium storing a computer-executable instruction. When the computer-executable instruction is executed, the method for adaptive selection of data network is implemented.

Compared with the related art, the embodiments of the present invention have the beneficial effects as follows.
1. Dual cards adaptively poll APNs at the same time.
2. Dual cards perform APN registration and test network transmission rates.
3. Dual cards dynamically and adaptively switch a data network according to the network transmission rates.

After the drawings and the detailed descriptions are read and understood, other aspects can be understood.

### Brief Description of Drawings

FIG. 1 is a flowchart of a method for adaptive selection of data network according to an embodiment of the present invention.
FIG. 2 is a structure diagram of a device for adaptive selection of data network according to an embodiment of the present invention.
FIG. 3 is a frame diagram of a terminal supporting a mobile data service according to an embodiment of the present invention.
FIG. 4 is a flowchart of a polling operation supporting a mobile data service according to an embodiment of the present invention.
FIG. 5 is a flowchart one of an adaptive network switching operation supporting a mobile data service according to an embodiment of the present invention.
FIG. 6 is a flowchart two of an adaptive network switching operation supporting a mobile data service according to an embodiment of the present invention.
FIG. 7 is a flowchart of a network transmission rate test operation supporting a mobile data service according to an embodiment of the present invention.

### Detailed Description

Alternative embodiments of the present invention will be described below in detail with reference to the accompanying drawings. It should be understood that the alternative embodiments described below are only used to illustrate and explain the present application and are not used to limit the present application.

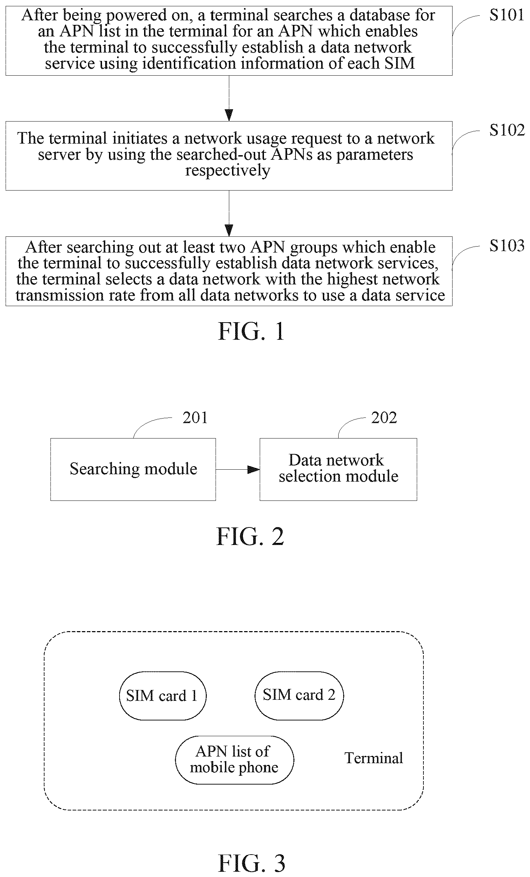

FIG. 1 is a flowchart of a method for adaptive selection of data network according to an embodiment of the present invention. As shown in FIG. 1, the method provided in the present embodiment includes the steps as follows.

In step S101, after being powered on, a terminal searches a database for an APN list in the terminal for an APN which enables the terminal to successfully establish a data network service using identification information of each SIM.

In step S102, the terminal initiates a network usage request to a network server by using searched-out APNs as parameters respectively.

In step S103, after searching out at least two APN groups which enable the terminal to successfully establish data network services, the terminal selects a data network with the highest network transmission rate from all data networks to use a data service.

In an embodiment of the present invention, the method further includes: when searching out an APN group which enables the terminal to successfully establish a data network service, the terminal selects a data network corresponding to the APN group to use a data service.

Herein, the identification information of each SIM corresponds to at least one APN group, and the database for the APN list in the terminal includes at least one APN group, and each APN group corresponds to network parameters of an operator.

Herein, the step that a terminal searches a database for an APN list in the terminal for an APN which enables the terminal to successfully establish a data network service using the identification information of each SIM includes: a terminal searches the database for the APN list in the terminal for at least one corresponding APN group using the identification information of each SIM; and the terminal initiates a data service establishment request to a network through each APN group as parameters in a polling manner according to the searched-out at least one APN group to search for APNs which enable the terminal to successfully establish a data network service.

Herein, the step that the terminal selects a data network with the highest network transmission rate from all data networks to use a data service includes: after searching out at least two APN groups which enable the terminal to successfully establish data network services, the terminal tests network transmission rates of data networks where the terminal successfully establishes data network services; and the terminal selects a data network with the highest network transmission rate to use a data service according to a network transmission rate test result of data networks where the data network services are successfully established. Herein, the step that the terminal tests the network transmission rates of data networks where the terminal successfully establishes data network services includes: statistics is made on network traffic of a current data network under a maximum support capability within a preset time period; and the network transmission rate of a data network successfully registered by each SIM is calculated through the time period and the network traffic.

FIG. 2 is a structure diagram of a device for adaptive selection of data network according to an embodiment of the present invention. As shown in FIG. 2, the device provided in the present embodiment includes a searching module 201 and a data network selection module 202. The searching module 201 is configured to search, after a terminal is powered on, a database for an APN list in the terminal for an APN which enables the terminal to successfully establish a data network service using identification information of each SIM, and initiate a network usage request to a network server by using the searched-out APNs as parameters respectively. The data network selection module 202 is configured to select, after the searching module searches out at least two APN groups which enable the terminal to successfully establish data network services, a data network with the highest network transmission rate from all data networks to use a data service.

Herein, the data network selection module 202 is further configured to select, when the searching module 201 searches out an APN group enabling the terminal to successfully establish a data network service, a data network corresponding to the APN group to use a data service.

Herein, the identification information of each SIM corresponds to at least one APN group, and the database for the APN list in the terminal includes at least one APN group, and each APN group corresponds to network parameters of an operator.

Herein, the searching module 201 includes: a searching unit configured to search a database for an APN list in the terminal for at least one corresponding APN group using the identification information of each SIM, and search, according to the at least one searched-out APN group, the at least one APN group for APNs enabling the terminal to successfully establish a data network service in a polling manner.

FIG. 3 is a frame diagram of a terminal supporting a mobile data service according to an embodiment of the present invention. As shown in FIG. 3, a system supporting a mobile data service provided in the present embodiment includes: a terminal supporting a dual-user identity card (SIM card or the like) slot, and at least two user identity cards (such as SIM card 1 and SIM card 2), and an APN list. Herein, the APN list is at least one APN group preset in the terminal. Each APN group corresponds to network parameters of an operator, and a database for an APN list is stored in a storage unit of the terminal in advance. Herein, the network supported by the terminal may include, but is not limited to, 2G, 3G, 4G, and the like. Herein, both the SIM card 1 and the SIM card 2 may support the use of data services such as 2G, 3G, 4G and the like. The user identity card includes, but is not limited to, currently mainstream user identity cards such as an SIM card, a Universal Subscriber Identity Module (USIM) card, and a User Identity Module (UIM) card and so on.

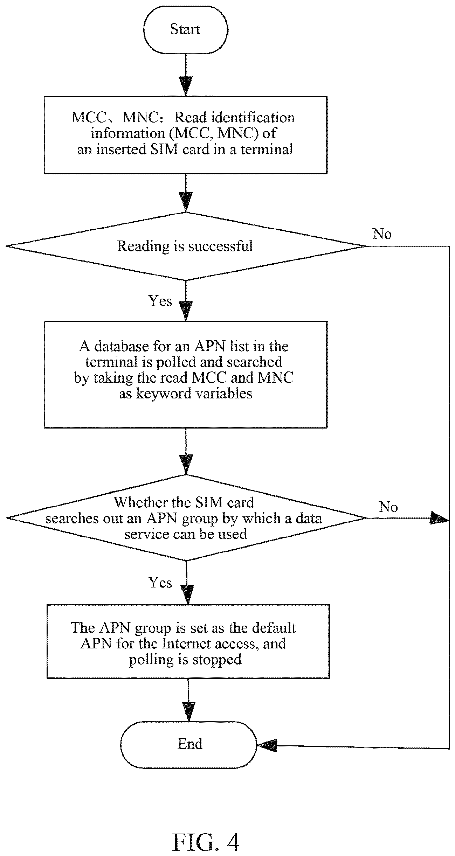

FIG. 4 is a flowchart of a polling operation supporting a mobile data service according to an embodiment of the present invention. As shown in FIG. 4, after a terminal is powered on, the terminal first reads the identification information of an inserted SIM card in the terminal, including a Mobile Country Code (MCC), a Mobile Network Code (MNC), and the like. After reading is successful, a database for an APN list in the terminal is searched by taking the read identification information as a keyword variable. The manner of searching may include polling with a fixed or irregular time cycle. Here, the polling operation is performed in a relatively common fixed time cycle manner, and the fixed time is, for example, 20 seconds. During the polling operation, once one APN group by which a data service can be used is searched out successfully, the APN group is set as the default APN for the Internet access, and polling is stopped. If no APN by which the data service can be used is searched out during the polling, a polling failure status is reported to notify a terminal system that currently there is no APN by which the data service can be used.

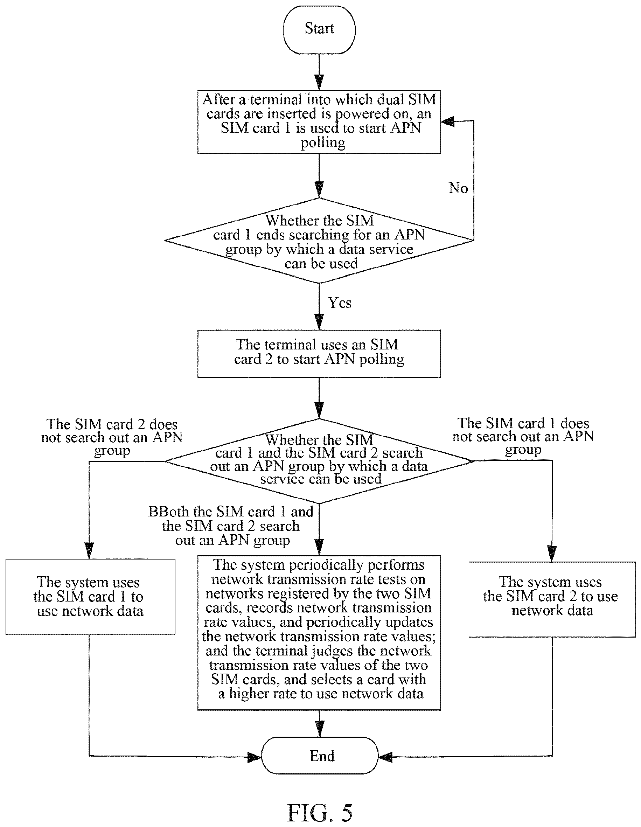

FIG. 5 is a flowchart one of an adaptive network switching operation supporting a mobile data service according to an embodiment of the present invention. As shown in FIG. 5, after a terminal into which dual SIM cards are inserted is powered on, the terminal first uses an SIM card 1 to start an APN polling operation. When the SIM card 1 successfully searches out an APN group by which a data service can be used, the terminal ends the APN polling operation for this card and enters the next operation. If the SIM card 1 does not search out an APN group by which the data service can be used after the polling is ended, the terminal ends the APN polling operation for this card and enters the next operation.

Following the previous operation, the terminal uses an SIM card 2 to start the APN polling operation. When the SIM card 2 successfully searches out an APN group by which the data service can be used, the terminal ends the APN polling operation for this card and enters the next operation. If the SIM card 2 does not search out an APN group by which the data service can be used after the polling is ended, the terminal ends the APN polling operation for this card and enters the next operation.

Following the previous operation, if the polling result is that dual cards cannot use a data network, the processing is ended. If the polling result is that only one card can use the data network, the terminal selects this card to use the data network, and the processing is ended. If the polling result is that both cards can use the data network, the next operation is performed.

Following the previous operation, the terminal system periodically and respectively performs network transmission rate tests on networks registered by the two SIM cards, records the network transmission rate values, and periodically updates the network transmission rate values. The terminal judges the network transmission rate values of the two SIM cards, and selects a card with a higher rate to use network data.

In other words, after the terminal into which dual SIM cards are inserted is powered on, and when the SIM card 1 (or SIM card 2) successfully searches out an APN group by which the data service can be used, the APN polling operation for this card is ended, and this card is used to use the data network. After that, the system performs a network transmission rate test on the network registered by this card and records the rate value. Meanwhile, the SIM card 2 (or SIM card 1) continues to perform the polling operation, and if an APN group by which the data service can be used is searched out successfully, the APN polling operation for this card is ended, and this card is used to use the data network. Thereafter, the system performs a network transmission rate test on the network registered by this card and records the rate value. At this time, the terminal judges the network transmission rate values of the two SIM cards, and selects a card with a higher rate to use network data.

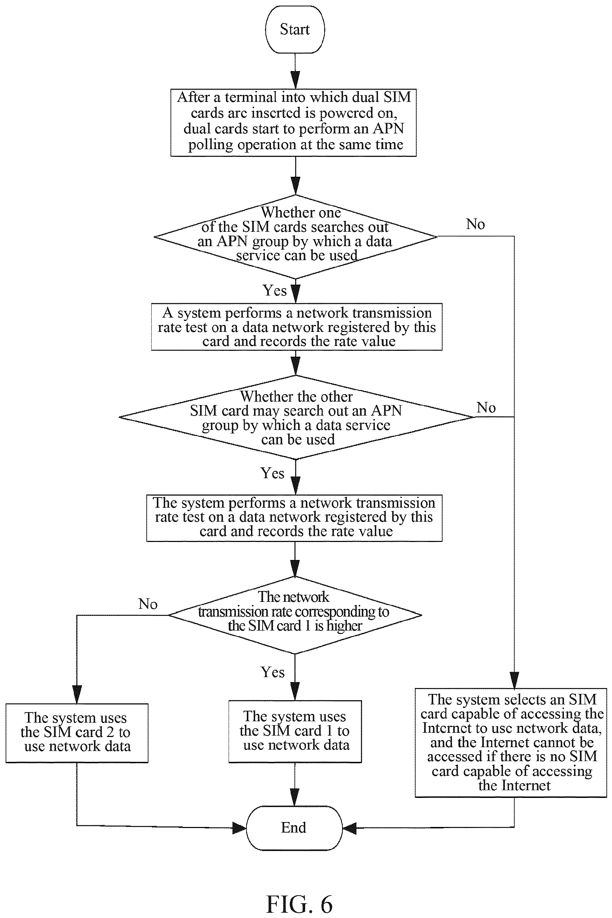

FIG. 6 is a flowchart two of an adaptive network switching operation supporting a mobile data service according to an embodiment of the present invention. As shown in FIG. 6, the terminal supports dual 4G cards and may use data networks at the same time. After the terminal into which dual SIM cards are inserted is powered on, dual cards start to perform an APN polling operation at the same time. When the SIM card 1 or SIM card 2 successfully searches out an APN group by which a data service can be used, the APN polling operation for this card is ended, and this card is used to use the data network; and the system performs a network transmission rate test on the data network registered by this card and records the rate value. If the polling result is that dual cards cannot use the data network, the processing is ended. If the polling result is that only one card can use the data network, the terminal selects this card to use the data network, and the processing is ended. If the polling result is that both cards can use the data network, the system performs network transmission rate tests on the data networks registered by the two SIM cards, records the network transmission rate values, judges the sizes of the network transmission rate values corresponding to the two SIM cards according to the rate test result, and selects a card with a higher rate to use network data.

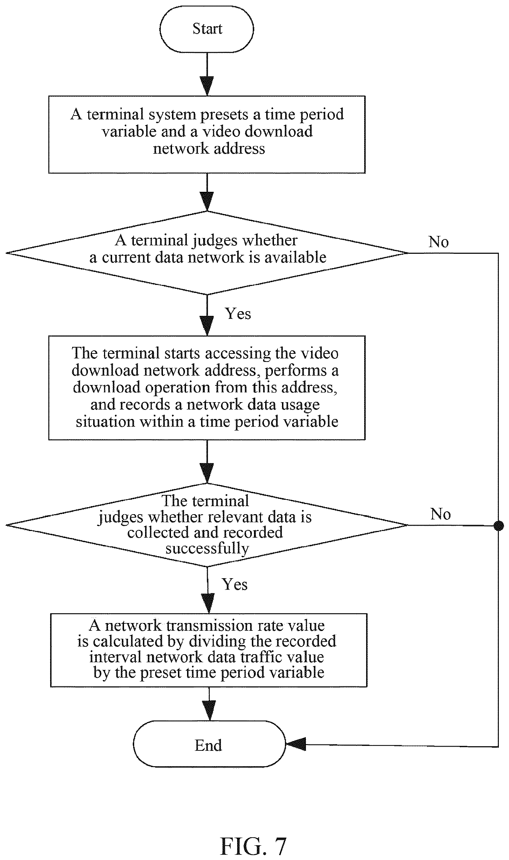

FIG. 7 is a flowchart of a network test operation supporting a mobile data service according to an embodiment of the present invention. As shown in FIG. 7, the terminal system presets a time period variable and a video download network address. The terminal judges whether a current data network is available. If the current data network is available, a rate test operation is started. First, the terminal starts accessing the video download network address, performs a download operation from this address, and records a network data usage situation within the time period variable. Within one time period variable, it is necessary to ensure that the network access maintains a maximum value without interruption. After that, the terminal judges whether relevant data is collected and recorded successfully. If yes, a network transmission rate value is calculated by dividing the recorded interval network data traffic value by the preset time period variable.

That is to say, a unit time period value is preset first, and then the network traffic is used under the maximum support capacity of the current network from the beginning to the end of the time period, and finally a current network traffic rate value is calculated by dividing the statistical traffic value during the time period by the unit time period value. That is, the manner for the terminal system to determine the network transmission rate may be described in two parts: data presetting and rate testing process.

The data presetting may include a time period variable, a network test resource address, and the like. The time period variable may determine the beginning and end time points of the rate testing process. The network test resource address is a network address that is set in advance for the test to meet expected test results. The terminal accesses the address when the test starts, and maximizes network data usage, aiming to obtain a maximum value of network data transmission.

The rate testing process may include: the terminal system starts to maximize network data usage at a predetermined point of time, and lasts the operation until a preset time period ends, records the network traffic value generated by the terminal during the preset time period, and calculates the network transmission rate value through the value and the time period variable.

In an exemplary embodiment, the terminal system may periodically perform the rate testing operation of the terminal and continuously update the network transmission rate value. When the system performs a network transmission rate test on a network registered by an SIM card, a network transmission rate variable may be collected in real time or at intervals, and a rate variable may be dynamically updated according to the latest collected data value. When the terminal uses a data network, data networks corresponding to the SIM card 1 and the SIM card 2 may work simultaneously or non-simultaneously. The scope protected by the present application includes, but is not limited to, a terminal that supports dual cards, and may also include a multi-card mobile phone, a multi-card terminal, or the like.

In summary, the embodiments of the present invention have the technical effects as follows.

According to the embodiments of the present invention, based on a terminal supporting a dual 4G SIM card technology, for an increasingly improving mobile 4G network technology, APN polling is performed at dual cards at the same time and network transmission rates are tested in real time. The embodiments of the present invention effectively achieve a function of dynamic and adaptive switching according to network transmission rates when dual SIM cards access the Internet, and provide better mobile online user experience.

In addition, an embodiment of the present invention also provides a terminal supporting at least two SIMs. The terminal includes a display and a processor. Herein, the processor is configured to: search, after the display displays that a terminal is powered on, a database for an APN list in the terminal for an APN which enables the terminal to successfully establish a data network service using the identification information of each SIM; initiate a network usage request to a network server by using the searched-out APNs as parameters respectively; and select, after searching out at least two APN groups which enable the terminal to successfully establish data network services, a data network with the highest network transmission rate from all data networks to use a data service.

In addition, an embodiment of the present invention also provides a computer-readable storage medium, storing a computer-executable instruction. When the computer-executable instruction is executed, the method for adaptive selection of data network is implemented.

Those of ordinary skill in the art may understand that all or some of the steps in the above-mentioned methods may be completed by instructing relevant hardware (e.g., processor) through a program. The program may be stored in a computer-readable storage medium such as a read-only memory, a magnetic disk or an optical disk or the like. In an exemplary embodiment, all or some of the steps in the above-mentioned embodiments may be implemented by at least one integrated circuit. Accordingly, each module/unit in the above-mentioned embodiments may be implemented in a form of hardware, and for example, corresponding functions thereof are implemented by means of an integrated circuit. Each module/unit in the above-mentioned embodiments may also be implemented in a form of software function module, and for example, corresponding functions thereof are implemented by executing programs/instructions stored in a memory by the processor. The present application is not limited to the combination of hardware and software in any specific form.

Although the present application has been described in detail above, the present application is not limited thereto, and those skilled in the art may make various modifications based on the principle of the present application. Therefore, any modifications made in accordance with the principles of the present application should be understood to fall within the protection scope of the present application.

### Industrial Applicability

Embodiments of the present invention provide a method and device for adaptive selection of data network. Based on a terminal supporting a dual 4G SIM card technology, APN polling is performed at dual cards at the same time and network transmission rates are tested in real time, thereby effectively achieving a function of dynamic and adaptive switching according to network transmission rates when dual SIM cards access the Internet, and providing better mobile online user experience.

## Claims

1. A method for adaptive selection of a data network, wherein the method is implemented by a terminal which supports at least two Subscriber Identity Modules, SIMs, and the method comprises the following steps:
in response to the terminal being powered on, by using identification information of each SIM, searching an Access Point Name, APN, list database of the terminal for at least one group of APN, wherein the identification information of each SIM corresponds to at least one group of APN; the APN list database of the terminal comprises at least one group of APN, which enables the terminal to successfully establish a data network service for each SIM, and each group of APN corresponds to network parameters of an operator; the method further comprising:
initiating a data service establishment request to a network through each group of APN as parameters in a polling manner according to the at least one group of APN searched-out to search for one group of APN which enables the terminal to successfully establish a data network service for each SIM (S101);
initiating a network usage request to a network server by using the one group of APN searched-out for each SIM as parameters respectively (S102); and
when the terminal finds that at least two groups of APNs searched-out can enable the terminal to successfully establish data network services, selecting a data network with the highest network transmission rate from all data networks to use a data service (S103).

2. The method according to claim 1, further comprising:
when the terminal finds that only one group of APN searched-out can enable the terminal to successfully establish a data network service, selecting a data network corresponding to the only one group of APN to use a data service.

3. The method according to claim 1, wherein the selecting a data network with a highest network transmission rate from all data networks to use a data service comprises:
when initiating, by the terminal, a network usage request to a network server by using searched-out APNs as parameters respectively (S102) the terminal finds that at least two groups of APNs searched-out can enable the terminal to successfully establish data network services, testing network transmission rates of data networks where the terminal successfully establishes the data network services; and
selecting a data network with the highest network transmission rate to use a data service according to a network transmission rate test result of the data networks where the data network services are successfully established.

4. The method according to claim 3, wherein the testing network transmission rates of data networks where the terminal successfully establishes the data network services comprises:
making statistics on network traffic of a current data network under a maximum support capability within a preset time period; and
calculating a network transmission rate of a data network successfully registered by each SIM through the time period and the network traffic.

5. A terminal configured to adaptively select a data network, the terminal comprising:
a searching module (201) configured to, in response that the terminal is powered on, by using identification information of each Subscriber Identity Module, SIM, search an Access Point Name, APN, list database of the terminal for at least one group of APN;
search, in the at least one group of APN, for one group of APN which enables the terminal to successfully establish a data network service for each SIM; and initiate a network usage request to a network server by using the one group of APN searched-out for each SIM as parameters respectively; wherein the terminal supports at least two SIMs, the identification information of each SIM corresponds to at least one group of APN; the APN list database of the terminal comprises at least one group of APN, and each group of APN corresponds to network parameters of an operator; and
a data network selection module (202) configured to, when the searching module finds that at least two groups of APNs can enable the terminal to successfully establish data network services, select a data network with the highest network transmission rate from all data networks to use a data service.

6. The terminal according to claim 5, wherein the data network selection module is further configured to, when the searching module finds that only one group of APN can enable the terminal to successfully establish a data network service, select a data network corresponding to the only one group of APN to use a data service.

7. A computer-readable storage medium storing a computer-executable instruction, wherein when the computer-executable instruction is executed, the method for adaptive selection of a data network according to any of claims 1 to 4 is implemented.

## Patentansprüche

1. Verfahren für die adaptive Auswahl eines Datennetzwerks, wobei das Verfahren von einem Endgerät umgesetzt wird, das mindestens zwei Subscriber Identity Modules, SIMs, unterstützt und das Verfahren die folgenden Schritte umfasst:
als Reaktion darauf, dass das Endgerät eingeschaltet wird, Durchsuchen einer Access-Point-Name-, APN-, Listendatenbank des Endgeräts nach mindestens einer Gruppe von APN, indem Identifikationsinformationen von jedem SIM verwendet werden, wobei die Identifikationsinformationen von jedem SIM mindestens einer Gruppe von APN entsprechen; wobei die APN-Listendatenbank des Endgeräts mindestens eine Gruppe von APN umfasst, die es dem Endgerät ermöglicht, erfolgreich einen Datennetzwerkdienst für jedes SIM einzurichten und jede Gruppe von APN Netzwerkparametern eines Betreibers entspricht; wobei das Verfahren ferner Folgendes umfasst:
Initiieren einer Anfrage zum Einrichten eines Datendienstes zu einem Netzwerk durch jede Gruppe von APN als Parameter auf eine abfragende Art und Weise gemäß der mindestens einen Gruppe von APN, die herausgesucht wurde, um nach einer Gruppe von APN zu suchen, die es dem Endgerät ermöglicht, erfolgreich einen Datennetzwerkdienst für jedes SIM einzurichten (S101);
Initiieren einer Netzwerknutzungsanfrage zu einem Netzwerkserver unter Verwendung der einen Gruppe von APN, die für jedes SIM herausgesucht wurde, jeweils als Parameter (S102); und
wenn das Endgerät feststellt, dass mindestens zwei Gruppen von APNs, die herausgesucht wurden, ermöglichen können, dass das Endgerät erfolgreich Datennetzwerkdienste einrichtet, Auswählen eines Datennetzwerks mit der höchsten Netzwerkübertragungsrate aus allen Datennetzwerken, um einen Datendienst zu verwenden (S103).

2. Verfahren nach Anspruch 1, ferner umfassend:
wenn das Endgerät feststellt, dass lediglich eine Gruppe von APN, die herausgesucht wurde, ermöglichen kann, dass das Endgerät erfolgreich einen Datennetzwerkdienst einrichtet,
Auswählen eines Datennetzwerks, das der lediglich einen Gruppe von APN entspricht, um einen Datendienst zu verwenden.

3. Verfahren nach Anspruch 1, wobei das Auswählen eines Datennetzwerks mit einer höchsten Netzwerkübertragungsrate aus allen Datennetzwerken, um einen Datendienst zu verwenden, Folgendes umfasst:
wenn das Endgerät beim Initiieren einer Netzwerknutzungsanfrage zu einem Netzwerkserver unter Verwendung herausgesuchter APNs jeweils als Parameter (S102) durch das Endgerät feststellt, dass mindestens zwei Gruppen von herausgesuchten APNs ermöglichen können, dass das Endgerät erfolgreich Datennetzwerkdienste einrichtet, Prüfen von Netzwerkübertragungsraten von Datennetzwerken, bei denen das Endgerät erfolgreich die Datennetzwerkdienste einrichtet; und
Auswählen eines Datennetzwerks mit der höchsten Netzwerkübertragungsrate, um einen Datendienst gemäß einem Testergebnis der Netzwerkübertragungsrate der Datennetzwerke zu verwenden, bei dem die Datennetzwerkdienste erfolgreich eingerichtet werden.

4. Verfahren nach Anspruch 3, wobei das Prüfen von Netzwerkübertragungsraten von Datennetzwerken, bei denen das Endgerät erfolgreich die Datennetzwerkdienste einrichtet, Folgendes umfasst:
Erstellen von Statistiken zum Netzwerkverkehr eines aktuellen Datennetzwerks bei einer maximalen Unterstützungsfunktion innerhalb eines vorgegebenen Zeitraums; und
Berechnen einer Netzwerkübertragungsrate eines Datennetzwerks, das erfolgreich von jedem SIM registriert wird, durch den Zeitraum und den Netzwerkverkehr.

5. Endgerät, das konfiguriert ist, um adaptiv ein Datennetzwerk auszuwählen, wobei das Endgerät Folgendes umfasst: ein Suchmodul (201), das konfiguriert ist, um als Reaktion darauf, dass das Endgerät eingeschaltet wird, eine Access-Point-Name-, APN-, Listendatenbank des Endgeräts nach mindestens einer Gruppe von APN zu durchsuchen, indem Identifikationsinformationen von jedem Subscriber Identity Module, SIM, verwendet werden; in der mindestens einen Gruppe von APN nach einer Gruppe von APN zu suchen, die es dem Endgerät ermöglicht, erfolgreich einen Datennetzwerkdienst für jedes SIM einzurichten; und eine Netzwerknutzungsanfrage zu einem Netzwerkserver unter Verwendung der einen Gruppe von APN, die für jedes SIM herausgesucht wurde, jeweils als Parameter zu initiieren; wobei das Endgerät mindestens zwei SIMs unterstützt, die Identifikationsinformationen von jedem SIM mindestens einer Gruppe von APN entsprechen; die APN-Listendatenbank des Endgeräts mindestens eine Gruppe von APN umfasst und jede Gruppe von APN Netzwerkparametern eines Betreibers entspricht; und ein Datennetzwerkauswahlmodul (202), das konfiguriert ist, um, wenn das Suchmodul feststellt, dass mindestens zwei Gruppen von APNs ermöglichen können, dass das Endgerät erfolgreich Datennetzwerkdienste einrichtet, ein Datennetzwerk mit der höchsten Netzwerkübertragungsrate aus allen Datennetzwerken auszuwählen, um einen Datendienst zu verwenden.

6. Endgerät nach Anspruch 5, wobei das Datennetzwerkauswahlmodul ferner konfiguriert ist, um, wenn das Suchmodul feststellt, dass lediglich eine Gruppe von APN ermöglichen kann, dass das Endgerät erfolgreich einen Datennetzwerkdienst einrichtet, ein Datennetzwerk auszuwählen, das der lediglich einen Gruppe von APN entspricht, um einen Datendienst zu verwenden.

7. Computerlesbares Speichermedium, das eine von einem Computer ausführbare Anweisung speichert, wobei, wenn die von einem Computer ausführbare Anweisung ausgeführt wird, das Verfahren für die adaptive Auswahl eines Datennetzwerks nach einem der Ansprüche 1 bis 4 umgesetzt wird.

## Revendications

1. Procédé pour sélection adaptative d'un réseau de données, dans lequel le procédé est mis en œuvre par un terminal qui prend en charge au moins deux modules d'identité d'abonné, SIM, et le procédé comprend les étapes suivantes :
en réponse à la mise sous tension du terminal, à l'aide des informations d'identification de chaque SIM, la recherche d'une base de données de liste de nom de point d'accès, APN, du terminal pour au moins un groupe d'APN, dans lequel les informations d'identification de chaque SIM correspondent à au moins un groupe d'APN ; la base de données de liste d'APN du terminal comprend au moins un groupe d'APN qui permet au terminal d'établir avec succès un service de réseau de données pour chaque SIM, et chaque groupe d'APN correspond aux paramètres réseau d'un opérateur ; le procédé comprenant en outre :
l'initiation d'une demande d'établissement de service de données à un réseau à travers chaque groupe d'APN en tant que paramètres par interrogation en fonction de l'au moins un groupe d'APN recherché pour rechercher un groupe d'APN qui permet au terminal d'établir avec succès un service de réseau de données pour chaque SIM (S101);
l'initiation d'une demande d'utilisation de réseau à un serveur de réseau en utilisant respectivement le groupe d'APN recherché pour chaque SIM en tant que paramètres (S102) ; et
lorsque le terminal constate qu'au moins deux groupes d'APN recherchés peuvent permettre au terminal d'établir avec succès des services de réseau de données, la sélection d'un réseau de données avec le taux de transmission de réseau le plus élevé parmi tous les réseaux de données pour utiliser un service de données (S103).

2. Procédé selon la revendication 1, comprenant en outre :
lorsque le terminal constate qu'un seul groupe d'APN recherché peut permettre au terminal d'établir avec succès un service de réseau de données, la sélection d'un réseau de données correspondant au seul groupe d'APN pour utiliser un service de données.

3. Procédé selon la revendication 1, dans lequel la sélection d'un réseau de données avec un taux de transmission de réseau le plus élevé parmi tous les réseaux de données pour utiliser un service de données comprend :
lors de l'initiation, par le terminal, d'une demande d'utilisation de réseau à un serveur de réseau en utilisant respectivement des APN recherchés en tant que paramètres (S102), le terminal constate qu'au moins deux groupes d'APN recherchés peuvent permettre au terminal d'établir avec succès des services de réseau de données, le test de taux de transmission de réseau des réseaux de données lorsque le terminal établit avec succès les services de réseau de données ; et
la sélection d'un réseau de données avec le taux de transmission de réseau le plus élevé pour utiliser un service de données en fonction d'un résultat de test de taux de transmission de réseau des réseaux de données lorsque les services de réseau de données sont établis avec succès.

4. Procédé selon la revendication 3, dans lequel le test de taux de transmission de réseau de réseaux de données lorsque le terminal établit avec succès les services de réseau de données comprend :
l'établissement de statistiques sur le trafic réseau d'un réseau de données actuel sous une capacité de prise en charge maximale dans une période de temps prédéfinie ; et
le calcul d'un taux de transmission de réseau d'un réseau de données enregistré avec succès par chaque SIM pendant la période de temps et à travers le trafic réseau.

5. Terminal configuré pour sélectionner de manière adaptative un réseau de données, le terminal comprenant :
un module de recherche (201) configuré pour, en réponse à la mise sous tension du terminal, à l'aide des informations d'identification de chaque module d'identité d'abonné, SIM, rechercher une base de données de liste de nom de point d'accès, APN, du terminal pour au moins un groupe d'APN ; rechercher, dans l'au moins un groupe d'APN, un groupe d'APN qui permet au terminal d'établir avec succès un service de réseau de données pour chaque SIM ; et initier une demande d'utilisation de réseau à un serveur de réseau en utilisant respectivement le groupe d'APN recherché pour chaque SIM en tant que paramètres ; dans lequel le terminal prend en charge au moins deux SIM, les informations d'identification de chaque SIM correspondent à au moins un groupe d'APN ; la base de données de liste d'APN du terminal comprend au moins un groupe d'APN, et chaque groupe d'APN correspond aux paramètres de réseau d'un opérateur ; et un module de sélection de réseau de données (202) configuré pour, lorsque le module de recherche constate qu'au moins deux groupes d'APN peuvent permettre au terminal d'établir avec succès des services de réseau de données, sélectionner un réseau de données avec le taux de transmission de réseau le plus élevé parmi tous les réseaux de données pour utiliser un service de données.

6. Terminal selon la revendication 5, dans lequel le module de sélection de réseau de données est en outre configuré pour, lorsque le module de recherche constate qu'un seul groupe d'APN peut permettre au terminal d'établir avec succès un service de réseau de données, sélectionner un réseau de données correspondant au seul groupe d'APN pour utiliser un service de données.

7. Support de stockage lisible par ordinateur stockant une instruction exécutable par ordinateur, dans lequel lorsque l'instruction exécutable par ordinateur est exécutée, le procédé pour sélection adaptative d'un réseau de données selon l'une quelconque des revendications 1 à 4 est mis en œuvre.
